# EUROPÄISCHE PATENTSCHRIFT

(11) **EP 3 418 175 B1**
(45) Veröffentlichungstag und Bekanntmachung des Hinweises auf die Patenterteilung: **24.02.2021**
(21) Anmeldenummer: 18168739.3
(22) Anmeldetag: 23.04.2018
(51) Int. Cl.: B62M 6/45

(54) **STEUERGERÄT UND STEUERUNGSVERFAHREN FÜR EINEN ANTRIEBSMOTOR EINES ZWEIRADS**
CONTROL DEVICE AND CONTROL METHOD FOR A DRIVE MOTOR OF A BICYCLE
APPAREIL DE COMMANDE ET PROCÉDÉ DE COMMANDE POUR UN MOTEUR D'ENTRAÎNEMENT D'UNE BICYCLETTE

(30) Priorität: 20.06.2017 DE 102017210296
(43) Veröffentlichungstag der Anmeldung: 26.12.2018
(73) Patentinhaber: Robert Bosch GmbH, 70442 Stuttgart (DE)
(72) Erfinder: Kieper, Alexander, 71229 Leonberg (DE)

(56) Entgegenhaltungen:
- DE-A1-102016 121 820
- JP-A- 2011 178 341
- US-A1- 2014 236 407
- US-A1- 2016 039 496

## Beschreibung

Steuerungsverfahren für einen Antriebsmotor eines Zweirads, Steuergerät, Zweirad mit dem Steuergerät, Verfahren zur Erzeugung von Routendaten sowie Datenträger Die vorliegende Erfindung betrifft ein Steuerungsverfahren für einen Antriebsmotor eines Zweirads, ein Steuergerät, welches dazu eingerichtet ist, das Steuerungsverfahren durchzuführen, und ein Zweirad mit dem Steuergerät. Die Erfindung betrifft auch ein Verfahren zur Erzeugung von Routendaten, welche an das Steuergerät gesendet werden, sowie einen Datenträger mit einem Computerprogramm, welches dazu eingerichtet ist, das Verfahren zur Erzeugung von Routendaten durchzuführen.

### Stand der Technik

Navigationsgeräte für Fahrräder zur Ermittlung von Strecken in Abhängigkeit eines Startortes oder des aktuellen Standortes und eines Zielortes sind bekannt. Für ein teilweise motorisch angetriebenes Elektrofahrrad ist des Weiteren eine Anpassung eines Unterstützungsgrads eines Antriebsmotors des Elektrofahrrads durch eine Eingabe des Fahrradfahrers Stand der Technik.

Ein Steuerungsverfahren, ein Steuergerät und ein Verfahren mit den Merkmalen der Präambeln der Ansprüche 1, 4 und 8 ist aus dem Dokument US 2014/0236407 A1 bekannt.

Die Aufgabe der vorliegenden Erfindung ist es, den Unterstützungsgrad eines Antriebsmotors eines teilweise motorisch angetriebenen Zweirads an die Gegebenheiten einer Fahrstrecke anzupassen.

### Offenbarung der Erfindung

Die vorliegende Erfindung betrifft ein Steuerungsverfahren für einen Antriebsmotor eines Zweirads. Das Zweirad ist dazu eingerichtet, manuell mittels einer Trittkraft des Zweiradfahrers auf Pedale des Zweirads und motorisch mittels eines Motordrehmoments des Antriebsmotors angetrieben zu werden.

Das Steuerungsverfahren weist eine Erfassung von Trittgrößen auf, die die Betätigung der Pedale durch den Zweiradfahrer repräsentieren. Des Weiteren werden aktuelle Ortskoordinaten des Zweirads und eine Fahrstrecke des Zweirads erfasst. In Abhängigkeit der erfassten Fahrstrecke werden anschließend Routendaten ausgelesen, beispielsweise aus einem elektrischen Speicher. Die Routendaten weisen die Streckenkoordinaten der Fahrtstrecke und einen jeweils zu den Streckenkoordinaten zugeordneten Unterstützungsgrad auf. Danach erfolgt eine Ermittlung des aktuellen Unterstützungsgrads in Abhängigkeit der aktuellen Ortskoordinaten und der Routendaten. Abschließend wird eine Ansteuerung des Antriebsmotors des Zweirads in Abhängigkeit des ermittelten Unterstützungsgrads und der erfassten Trittgrößen durchgeführt. Das Steuerungsverfahren weist den Vorteil eines vorgegebenen Unterstützungsgrades für bestimmte Streckenkoordinaten einer Fahrstrecke auf. Dadurch wird beispielsweise bei einer Fahrt mit einem Elektrofahrrad vor einer Überquerung einer großen Straße oder eines Bahnübergangs oder während eines verwinkelten Streckenabschnitts ein reduzierter Unterstützungsgrad vorgesehen. Der Unterstützungsgrad kann somit beispielsweise für Gefahrenstellen und/oder auf einer täglichen Fahrstrecke zur Arbeit an einer Steigung vorgegeben und dann während der Fahrt in Abhängigkeit der aktuellen Ortskoordinaten automatisch angepasst werden.

In einer bevorzugten Ausführungsform erfolgt die Erfassung der Routendaten durch einen Empfang der Routendaten von einem Rechner und/oder einer Servereinrichtung. Durch diese bevorzugte Ausführungsform kann vorteilhafterweise ein Nutzer des Zweirads den Unterstützungsgrad für Routenabschnitte der Fahrstrecke an einem Rechner komfortabel anpassen. Die Routendaten werden anschließend an ein Steuergerät übertragen, welches dazu eingerichtet ist, an dem Zweirad angeordnet zu sein und den Antriebsmotor gemäß des Steuerverfahrens anzusteuern. Alternativ oder zusätzlich wird vorteilhafterweise mittels des Empfangs von Routendaten von einer Servereinrichtung der Unterstützungsgrad an bekannten Gefahrenstellen angepasst. Dadurch wird der Antriebsmotor des Zweirads an einem Ort in Abhängigkeit des durch den Nutzer an einem Rechner oder durch eine Servervorrichtung vorgegebenen Unterstützungsgrads an diesem Ort angesteuert, wodurch beispielsweise die Unfallgefahr an einer Gefahrenstelle reduziert wird. alternativ kann vorgesehen sein die Routendaten mit einer Eingabevorrichtung an dem Steuergerät zu erstellen und im Speicher des Steuergeräts zu speichern.

In einer weiteren Ausgestaltung weist das Verfahren vor der Ansteuerung des Antriebsmotors eine Ermittlung einer Fahrtrichtung des Zweirads in Abhängigkeit der erfassten Ortskoordinaten auf. In dieser Ausgestaltung wird die Ermittlung des aktuellen Unterstützungsgrad zusätzlich in Abhängigkeit der Fahrtrichtung durchgeführt. Dadurch entsteht der Vorteil, dass ein Zweiradfahrer den Unterstützungsgrad zu Trainingszwecken an einem Ort richtungsabhängig vorgeben kann, beispielsweise wird der vorgegebene Unterstützungsgrad des Zweirads auf dem täglichen Hinweg zur Arbeit und auf dem täglichen Rückweg von der Arbeit, d.h. in Abhängigkeit der Fahrtrichtung, angepasst.

Die Erfindung betrifft auch das Steuergerät für den Antriebsmotor des Zweirads. Das Steuergerät erfasst Trittgrößen mittels eines Trittgrößensensors. Des Weiteren erfasst das Steuergerät die aktuellen Ortskoordinaten des Zweirads mittels eines Ortssensors, beispielsweise eines GPS-Sensors. Das Steuergerät erfasst ferner die Fahrstrecke. In Abhängigkeit der erfassten Fahrstrecke liest das Steuergerät Routendaten aus einem elektrischen Speicher des Steuergerätes aus. Das Steuergerät ermittelt anschließend einen aktuellen Unterstützungsgrad in Abhängigkeit der Routendaten und der aktuellen Ortskoordinaten. Das Steuergerät erzeugt ferner ein Steuersignal zur Ansteuerung des Antriebsmotors in Abhängigkeit des ermittelten Unterstützungsgrads und der erfassten Trittgrößen.

Vorzugsweise erfasst das Steuergerät die Routendaten von einem Rechner und/oder einer Servereinheit, insbesondere empfängt das Steuergerät die Routendaten mittels einer kabellosen Verbindung, insbesondere einer Bluetooth- oder WLAN-Verbindung.

In einer Weiterführung ermittelt das Steuergerät eine Fahrtrichtung des Zweirads in Abhängigkeit der erfassten Ortskoordinaten. Das Steuergerät bestimmt anschließend den aktuellen Unterstützungsgrad zusätzlich in Abhängigkeit der ermittelten Fahrtrichtung.

Die Erfindung betrifft auch das Zweirad mit einem Steuergerät.

Die Erfindung betrifft des Weiteren ein Verfahren zur Erzeugung der Routendaten. Das Verfahren zur Erzeugung der Routendaten beginnt mit einer Erfassung einer ersten Nutzereingabe. Anschließen erfolgt eine Ermittlung einer Fahrstrecke mit Streckenkoordinaten in Abhängigkeit der ersten Nutzereingabe. Anschließend erfolgt eine Erfassung einer zweiten Nutzereingabe. Die zweite Nutzereingabe umfasst einen vorgegebenen Unterstützungsgrad in Abhängigkeit von Streckenkoordinaten der Fahrstrecke. Beispielsweise wird in einem verwinkelten Streckenabschnitt oder in einem Bereich einer Überquerung einer großen Straße der vorgegebene Unterstützungsgrad reduziert. Danach erfolgt ein Schreiben von Routendaten in einen Speicher, wobei die Routendaten die Streckenkoordinaten und den jeweils für die Streckenkoordinaten erfassten vorgegebenen Unterstützungsgrad zu der Fahrstrecke aufweisen. Abschließend werden die Routendaten an ein Steuergerät gesendet, welches zur Ansteuerung des Antriebsmotors des Zweirads in Abhängigkeit der Routendaten eingerichtet ist.

Vorzugsweise erfolgt die Erfassung der zweiten Nutzereingabe in Abhängigkeit von Streckenabschnitten.

In einer Weiterführung erfolgt die Erfassung der zweiten Nutzereingabe zusätzlich in Abhängigkeit der Fahrtrichtung.

Die Erfindung betrifft des Weiteren einen Datenträger mit einem Computerprogramm, wobei das Computerprogramm dazu eingerichtet ist, ein Verfahren zur Erzeugung von Routendaten durchzuführen.

Die vorliegende Erfindung wird nachfolgend anhand bevorzugter Ausführungsformen und beigefügter Zeichnungen erläutert.
- Figur 1:: Elektrofahrrad
- Figur 2:: Ablauf des Steuerungsverfahrens als Blockdiagramm
- Figur 3:: Steuergerät
- Figur 4:: Ablauf des Verfahrens zur Erzeugung von Routendaten
- Figur 5:: Kartendarstellung im Verfahren zur Erzeugung von Routendaten
- Figur 6:: Rechner, Servereinrichtung und Steuergerät

### Ausführungsbeispiele

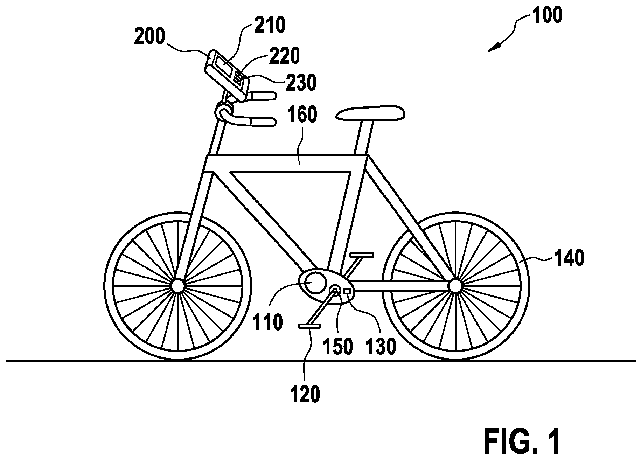

In Figur 1 ist ein Elektrofahrrad als Zweirad 100 mit einem Antriebsmotor 110 zum motorischem Antrieb und zwei Pedalen 120 zum manuellen Antrieb mindestens eines Rades 140 des Zweirads 100 dargestellt. Das Zweirad 100 weist ferner einen Trittgrößensensor 130 auf. Der Trittgrößensensor 130 ist dazu eingerichtet, Trittgrößen des Zweiradfahrers auf die Pedale 120 zu erfassen. Die Trittgröße repräsentiert die Betätigung der Pedale 120 bzw. die Trittkraft auf die Pedale 120 durch den Zweiradfahrer. Der Trittgrößensensor 130 kann beispielsweise ein Drehmomentsensor 130 sein, welcher dazu eingerichtet ist, dass mittels der Pedale 120 auf die Kurbelwelle 150 aufgebrachte Fahrerdrehmoment zu erfassen. Das Steuergerät 200 steuert den Antriebsmotor 110 in Abhängigkeit der erfassten Trittgrößen gemäß eines Unterstützungsgrad an. Beispielsweise werden die erfassten Trittgrößen innerhalb einer vorgegebenen Zeitspanne gemittelt. Anschließend wird ein Motordrehmoment in Abhängigkeit des Unterstützungsgrades und der gemittelten Trittgrößen erzeugt. Beispielsweise wird ein proportional zu bzw. linear mit der gemittelten Trittgrößen steigendes Motordrehmoment erzeugt, wobei der Unterstützungsgrad ein Proportionalitätsfaktor ist. Der Unterstützungsgrad kann beispielsweise als "Turbo", wobei ein hoher Unterstützungsgrad für den Zweiradantrieb eingestellt wird, oder "Eco", wobei ein niedriger Unterstützungsgrad für den Zweiradantrieb eingestellt wird, bezeichnet sein. Das Steuergerät 200 weist eine Anzeigevorrichtung 210 und einen Ortssensor 220, insbesondere einen GPS-Sensor, auf. Der Ortsensor 220 kann alternativ beispielsweise am Zweiradrahmen 160 angeordnet sein. Die Anzeigevorrichtung 210 ist dazu eingerichtet, dem Zweiradfahrer beispielsweise eine Karte und/oder den Unterstützungsgrad anzuzeigen.

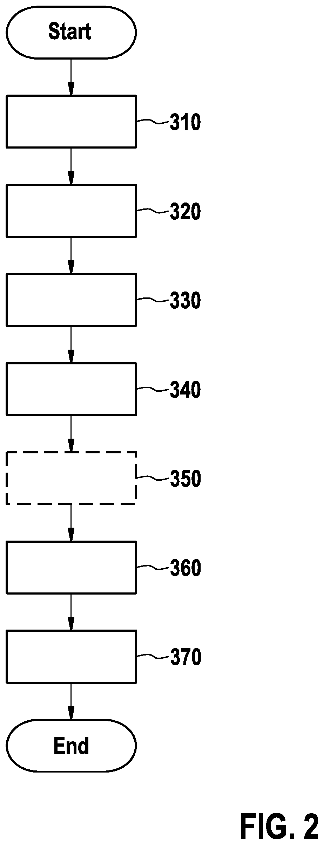

In Figur 2 ist ein Ablauf des Steuerungsverfahrens als Blockdiagramm dargestellt. In einem ersten Schritt 310 werden die Trittgrößen erfasst. In einem weiteren Schritt 320 wird die Erfassung von aktuellen Ortskoordinaten des Zweirads 100 durchgeführt. Des Weiteren erfolgt eine Erfassung 330 einer Fahrstrecke. Die Fahrtstrecke wird beispielsweise durch eine Eingabe des Nutzers mittels einer Eingabevorrichtung 230 des Steuergerätes 200 durchgeführt. In Abhängigkeit der erfassten Fahrstrecke wird eine Erfassung 340 von Routendaten durchgeführt, wobei die Routendaten die Streckenkoordinaten der Fahrtstrecke und einem jeweils zu den Streckenkoordinaten zugeordneten Unterstützungsgrad aufweisen. In einem optionalen Verfahrensschritt 350 ist vorgesehen, die Fahrtrichtung in Abhängigkeit der erfassten Ortskoordinaten zu ermitteln, wobei die Routendaten in dieser Ausgestaltung des Verfahrens an Streckenkoordinaten einen richtungsabhängigen Unterstützungsgrad aufweisen. Anschließend erfolgt eine Ermittlung 360 des aktuellen Unterstützungsgrads in Abhängigkeit der erfassten Routendaten und der erfassten aktuellen Ortskoordinaten. Die Ermittlung 360 des aktuellen Unterstützungsgrad kann zusätzlich optional in Abhängigkeit der ermittelten Fahrtrichtung vorgesehen sein. Die Ansteuerung 370 des Antriebsmotors erfolgt abschließend in Abhängigkeit des ermittelten aktuellen Unterstützungsgrads und der erfassten Trittgrößen.

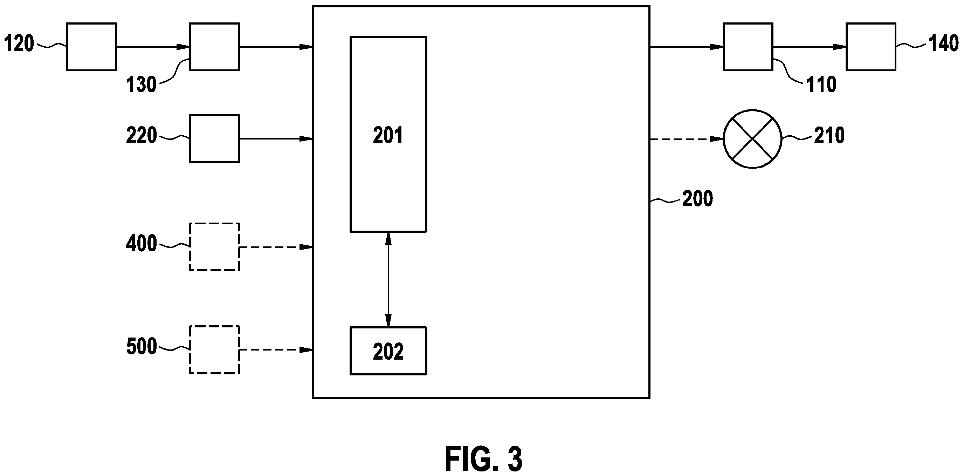

In Figur 3 ist das Steuergerät 200 dargestellt. Das Steuergerät weist eine Recheneinheit 201 und einen elektrischen Speicher 202 auf. Das Steuergerät 200 erfasst Trittgrößen des Zweiradfahrers mittels eines Trittgrößensensors 130, wobei die Trittgrößen eine Betätigung der Pedalen 120 durch den Zweiradfahrer repräsentieren. Der Trittgrößensensors 130 kann beispielsweise ein Kraftsensor auf den Pedalen 120 zur Erfassung der Trittkraft oder ein Drehmomentsensor an der Kurbelwelle 150 zur Erfassung des Fahrerdrehmoments sein. Das Steuergerät 200 erfasst des Weiteren aktuelle Ortskoordinaten mittels eines Ortssensors 220. Das Steuergerät 200 erfasst ferner eine Fahrtstrecke. Die Fahrtstrecke kann beispielsweise durch eine Eingabevorrichtung 230 des Steuergerätes erfasst werden. Die Recheneinheit 201 des Steuergerätes 200 erfasst in Abhängigkeit der Fahrtstrecke Routendaten aus dem elektrischen Speicher 202. Alternativ oder zusätzlich erfolgt die Erfassung 340 der Routendaten von einem Rechner 400 und/oder einer Servereinrichtung 500 mittels beispielsweise einer USB-, einer Bluetooth-, einer WLAN- oder einer Mobilfunk-Verbindung. Anschließend ermittelt die Recheneinheit 210 des Steuergerätes 200 einen aktuellen Unterstützungsgrad in Abhängigkeit der ausgelesenen Routendaten und der erfassten aktuellen Ortskoordinaten. Abschließend erzeugt die Recheneinheit 201 bzw. das Steuergerät 200 ein Steuersignal zur Ansteuerung des Antriebsmotors 110 in Abhängigkeit des ermittelten Unterstützungsgrads und der erfassten Trittgrößen. In Abhängigkeit des Steuersignals wird ein Motordrehmoment mittels des Antriebsmotors 110 zum Antrieb mindestens eines Rads 140 des Zweirads 100 erzeugt. Das Steuergerät 200 kann zusätzlich ein Anzeigesignal für die Anzeigevorrichtung 210 erzeugen, wobei das Anzeigesignal beispielsweise die Fahrtstrecke, die Routendaten und/oder den aktuellen Unterstützungsgrad repräsentiert.

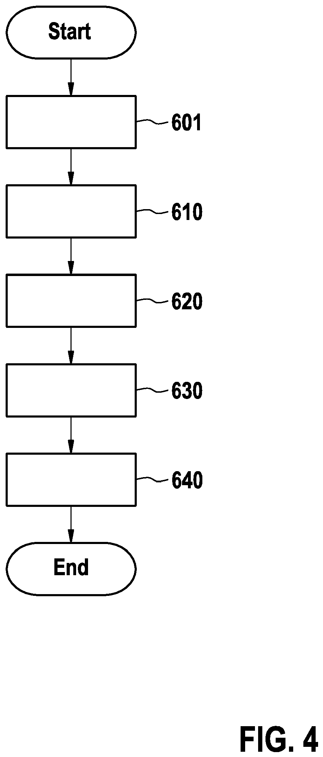

In Figur 4 ist der Ablauf des Verfahrens zur Erzeugung von Routendaten dargestellt. Das Verfahren wird mittels eines Rechners 400 durchgeführt. Das Verfahren zur Erzeugung von Routendaten beginnt mit der Erfassung 601 einer ersten Nutzereingabe. Die erfasste erste Nutzereingabe weist beispielsweise einen Startort A und einen Zielort B und optional eine Streckenkategorie auf. In Abhängigkeit der ersten Nutzereingabe erfolgt eine Ermittlung 610 einer Fahrstrecke mit Streckenkoordinaten. Die Streckenkoordinaten weisen beispielsweise zwischen dem Startort A und dem Zielort B eine Gefahrenstelle C auf. In einem anschließenden Verfahrensschritt erfolgt eine Erfassung 620 einer zweiten Nutzereingabe. Die zweite Nutzereingabe weist einen vorgegebenen Unterstützungsgrad in Abhängigkeit von den Streckenkoordinaten auf. Beispielsweise wählt der Nutzers durch die zweite Nutzereingabe an der Gefahrenstelle C einen reduzierten Unterstützungsgrad. Zur Erhöhung des Eingabekomforts kann vorgesehen sein, dass der durch den Nutzer vorgegebene Unterstützungsgrad in Abhängigkeit von den Streckenkoordinaten abschnittsweise und/oder bildlich erfasst wird. Es kann optional zusätzlich vorgesehen sein, dass die zweite Nutzereingabe Streckenkoordinaten einen Unterstützungsgrad und eine Fahrtrichtung zuordnet. Anschließend werden die Routendaten in ein Speicherelement 402 des Rechners 400 geschrieben, wobei die Routendaten die ermittelten Streckenkoordinaten und den jeweils für die Streckenkoordinaten erfassten vorgegebenen Unterstützungsgrad zu der Fahrstrecke und optional zu einem vorgegebenen Unterstützungsgrad eine zugeordnete Fahrtrichtung aufweisen. Abschließend erfolgt ein Senden 640 der Routendaten an den Speicher 202 des Steuergeräts 200.

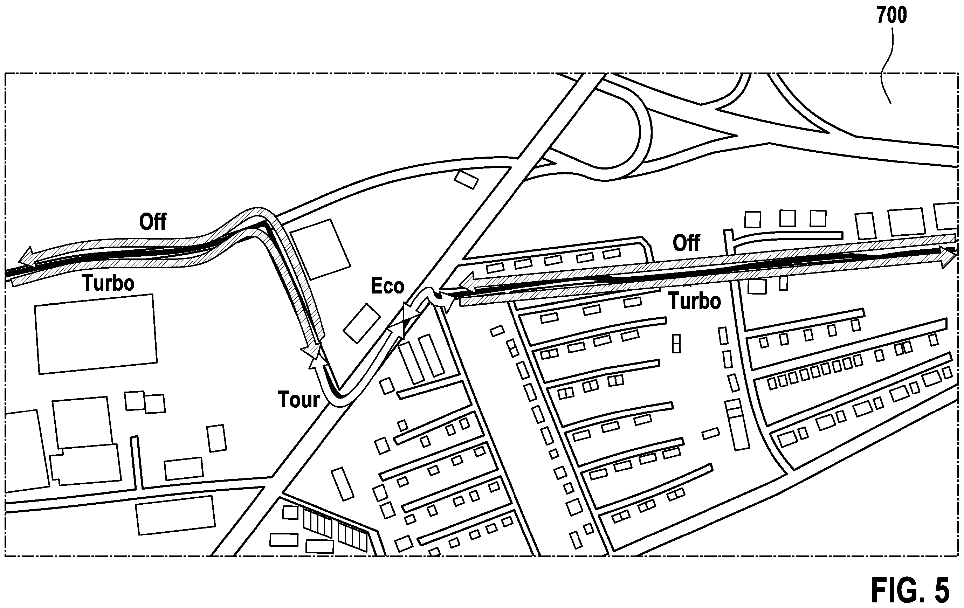

In Figur 5 ist eine Kartendarstellung 700 zur Erfassung 620 einer zweiten Nutzereingabe eines vorgegebenen Unterstützungsgrad in Abhängigkeit von den Streckenkoordinaten durch den Nutzer dargestellt. Demnach plant der Nutzer anhand einer bereits in Abhängigkeit der ersten Nutzereingabe ermittelten Fahrtstrecke in Abhängigkeit der Fahrtrichtung auf Streckenabschnitten den vorgegebenen Unterstützungsgrad. Die Erfassung 620 einer zweiten Nutzereingabe erfolgt in diesem Ausführungsbeispiel mittels einer Kartenansicht, wobei der Unterstützungsgrad auf den Streckenabschnitten richtungsabhängig ist. Mit der zweiten Nutzereingabe ordnet der Nutzer den Streckenabschnitten die Unterstützungsmoden "Off", "Eco", "Tour" oder "Turbo" zu.

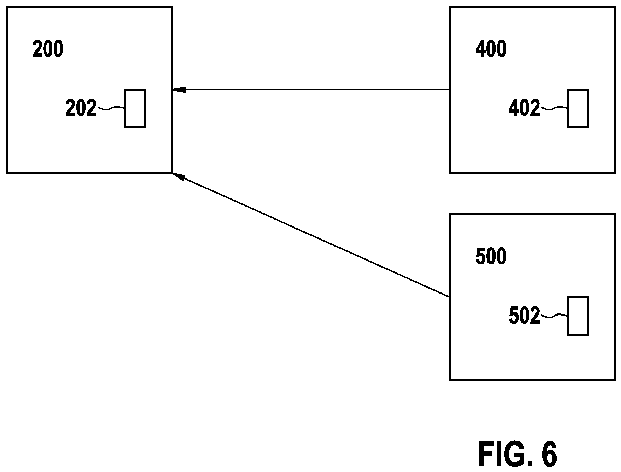

In Figur 6 ist ein Rechner 400 mit einem Speicherelement 402, eine Servereinrichtung 500 mit einem Speicherelement 502 und ein Steuergerät 200 mit einem Speicher 202 dargestellt. Mittels eines auf dem Rechner 400 durchgeführten Verfahrens zur Erzeugung von Routendaten werden die Routendaten erzeugt und in einem Speicherelement 402 gespeichert sowie an den Speicher 202 des Steuergeräts 200 gesendet. Es kann vorgesehen sein, das eine Servereinrichtung 500 Routendaten aus einem Serverspeicher 502 an das Steuergerät 200 bzw. den Speicher 202 sendet. Die Routendaten aus der Servereinrichtung 500 enthalten beispielsweise reduzierte vorgegebene Unterstützungsgrade an Gefahrenstellen bzw. Gefahrenkoordinaten.

## Patentansprüche

1. Steuerungsverfahren für einen Antriebsmotor (110) eines Zweirads (100), wobei das Zweirad (100) dazu eingerichtet ist, manuell mittels einer Trittkraft des Zweiradfahrers auf Pedale (120) des Zweirads (100) und motorisch mittels eines Motordrehmoments des Antriebsmotors (110) angetrieben zu werden, wobei das Steuerungsverfahren die folgenden Schritte aufweist
• Erfassung (310) von Trittgrößen, die die Betätigung der Pedale (120) durch den Zweiradfahrer repräsentieren,
• Erfassung (320) von aktuellen Ortskoordinaten des Zweirads (100),
• Erfassung (330) einer Fahrstrecke, und
• Ansteuerung (370) des Antriebsmotors in Abhängigkeit der erfassten Trittgrößen und eines ermittelten aktuellen Unterstützungsgrades,
**dadurch gekennzeichnet, dass** das Steuerungsverfahren vor der Ansteuerung des Antriebsmotors (110) folgende Schritte aufweist
• Erfassung (340) von Routendaten in Abhängigkeit der erfassten Fahrstrecke, wobei die Routendaten die Streckenkoordinaten der Fahrtstrecke und einen jeweils zu den Streckenkoordinaten zugeordneten Unterstützungsgrad aufweisen, und
• Ermittlung (360) des aktuellen Unterstützungsgrades in Abhängigkeit der Routendaten und der aktuellen Ortskoordinaten.

2. Steuerungsverfahren nach Anspruch 1, **dadurch gekennzeichnet, dass** die Erfassung (330) der Routendaten durch einen Empfang der Routendaten von einem Rechner und/oder einer Servereinrichtung erfolgt.

3. Steuerungsverfahren nach einem der vorhergehenden Ansprüche, **dadurch gekennzeichnet, dass** das Steuerungsverfahren vor der Ansteuerung (370) des Antriebsmotors (110) die folgenden Schritte aufweist
• Ermittlung (350) einer Fahrtrichtung des Zweirads (100) in Abhängigkeit der erfassten Ortskoordinaten, und
• Ermittlung (360) des aktuellen Unterstützungsgrades zusätzlich in Abhängigkeit der ermittelten Fahrtrichtung.

4. Steuergerät (200) für einen Antriebsmotor (110) eines Zweirads (100), wobei das Zweirad (100) dazu eingerichtet ist, manuell mittels einer Trittkraft des Zweiradfahrers auf Pedale (120) des Zweirads (100) und motorisch mittels eines Motordrehmoments des Antriebsmotors (110) angetrieben zu werden, wobei das Steuergerät (200)
• Trittgrößen mittels eines Trittgrößensensors (130) erfasst, wobei die Trittgrößen die Betätigung der Pedale (120) durch den Zweiradfahrer repräsentieren,
• aktuelle Ortskoordinaten des Zweirads (100) mittels eines Ortssensors (220) erfasst,
• eine Fahrstrecke erfasst, und
• ein Steuersignal zur Ansteuerung (370) des Antriebsmotors (110) in Abhängigkeit der erfassten Trittgrößen und eines ermittelten aktuellen Unterstützungsgrades erzeugt,
**dadurch gekennzeichnet, dass** das Steuergerät (200)
• Routendaten in Abhängigkeit der erfassten Fahrstrecke erfasst, wobei die Routendaten die Streckenkoordinaten der Fahrtstrecke und einen jeweils zu den Streckenkoordinaten zugeordneten Unterstützungsgrad aufweisen, und
• den aktuellen Unterstützungsgrad in Abhängigkeit der Routendaten und der aktuellen Ortskoordinaten ermittelt.

5. Steuergerät (200) nach Anspruch 4, **dadurch gekennzeichnet, dass** das Steuergerät (200)
• die Routendaten von einem Rechner (400) und/oder einer Servereinheit (500) erfasst.

6. Steuergerät (200) nach einem der vorhergehenden Ansprüche 4 oder 5, **dadurch gekennzeichnet, dass** das Steuergerät (200)
• eine Fahrtrichtung des Zweirads (100) in Abhängigkeit der erfassten Ortskoordinaten ermittelt, und
• den aktuellen Unterstützungsgrad zusätzlich in Abhängigkeit der bestimmten Fahrtrichtung ermittelt.

7. Zweirad (100) mit einem Steuergerät (200) nach einem der Ansprüche 4 bis 6.

8. Verfahren zur Erzeugung von Routendaten, aufweisend die Schritte
• Erfassung (601) einer ersten Nutzereingabe, und
• Ermittlung (610) einer Fahrstrecke mit Streckenkoordinaten in Abhängigkeit der ersten Nutzereingabe,
**dadurch gekennzeichnet, dass** das Verfahren die folgenden Schritte aufweist
• Erfassung (620) einer zweiten Nutzereingabe, wobei die zweite Nutzereingabe einen vorgegebenen Unterstützungsgrad in Abhängigkeit der Streckenkoordinaten umfasst,
• Schreiben (630) von Routendaten in ein Speicherelement (402), wobei die Routendaten die Streckenkoordinaten der Fahrtstrecke und einen jeweils zu den Streckenkoordinaten zugeordneten Unterstützungsgrad aufweisen, und
• Senden (640) der Routendaten an einen Speicher (202) eines Steuergeräts (200) nach einem der Ansprüche 4 bis 6.

9. Verfahren nach Anspruch 8, **dadurch gekennzeichnet, dass** die Erfassung (620) der zweiten Nutzereingabe in Abhängigkeit von Streckenabschnitten erfolgt.

10. Verfahren nach einem der Ansprüche 8 oder 9, **dadurch gekennzeichnet, dass** die Erfassung (620) der zweiten Nutzereingabe zusätzlich in Abhängigkeit einer Fahrtrichtung erfolgt.

11. Datenträger mit einem Computerprogramm, welches dazu eingerichtet ist, ein Verfahren nach einem der Ansprüche 8 bis 10 durchzuführen.

## Claims

1. Control method for a drive motor (110) of a bicycle (100), wherein the bicycle (100) is configured to be driven manually by means of pedalling force of the cyclist applied to pedals (120) of the bicycle (100) and by a motor by means of a motor torque of the drive motor (110), wherein the control method comprises the following steps:
• acquiring (310) pedalling variables which represent the activation of the pedals (120) by the cyclist,
• acquiring (320) current location coordinates of the bicycle (100),
• acquiring (330) a route, and
• actuating (370) the drive motor as a function of the acquired pedalling variables and a determined current degree of assistance,
**characterized in that** the control method comprises the following steps before the actuation of the drive motor (110):
• acquiring (340) route data as a function of the acquired route, wherein the route data has the route coordinates of the route and a degree of assistance which is respectively assigned to the route coordinates, and
• determining (360) the current degree of assistance as a function of the route data and the current location coordinates.

2. Control method according to Claim 1, **characterized in that** the acquiring (330) of the route data is carried out by reception of the route data from a computer and/or a server device.

3. Control method according to one of the preceding claims, **characterized in that** the control method comprises the following steps before the actuation (370) of the drive motor (110):
• determining (350) a direction of travel of the bicycle (100) as a function of the acquired location coordinates, and
• determining (360) the current degree of assistance additionally as a function of the determined direction of travel.

4. Control unit (200) for a drive motor (110) of a bicycle (100), wherein the bicycle (100) is configured to be driven manually by means of pedalling force of the cyclist applied to pedals (120) of the bicycle (100) and by a motor by means of a motor torque of the drive motor (110), wherein the control unit (200)
• acquires pedalling variables by means of a pedalling variable sensor (130), wherein the pedalling variables represent the actuation of the pedals (120) by the cyclist,
• acquires location coordinates of the bicycle (100) by means of a location sensor (220),
• acquires a route, and
• generates a control signal for actuating (370) the drive motor (110) as a function of the acquired pedalling variables and of a determined current degree of assistance,
**characterized in that** the control unit (200)
• acquires route data as a function of the acquired route, wherein the route data has the route coordinates of the route and a degree of assistance which is respectively assigned to the route coordinates, and
• determines the current degree of assistance as a function of the route data and the current location coordinates.

5. Control unit (200) according to Claim 4, **characterized in that** the control unit (200)
• acquires the route data from a computer (400) and/or a server unit (500).

6. Control unit (200) according to one of the preceding Claims 4 and 5, **characterized in that** the control unit (200)
• determines a direction of travel of the bicycle (100) as a function of the acquired location coordinates, and
• additionally determines the current degree of assistance as a function of the determined direction of travel.

7. Bicycle (100) having a control unit (200) according to one of Claims 4 to 6.

8. Method for generating route data, comprising the steps:
• acquiring (601) a first user input, and
• determining (610) a route with route coordinates as a function of the first user input,
**characterized in that** the method comprises the following steps:
• acquiring (620) a second user input, wherein the second user input comprises a predefined degree of assistance as a function of the route coordinates,
• writing (630) route data into a memory element (402), wherein the route data has the route coordinates of the route and a degree of assistance which is respectively assigned to the route coordinates, and
• transmitting (640) the route data to a memory (202) of a control unit (200) according to one of Claims 4 to 6.

9. Method according to Claim 8, **characterized in that** the acquiring (620) of the second user input takes place as a function of route sections.

10. Method according to one of Claims 8 and 9, **characterized in that** the acquiring (620) of the second user input additionally takes place as a function of a direction of travel.

11. Data carrier having a computer program which is configured to carry out a method according to one of Claims 8 to 10.

## Revendications

1. Procédé de commande pour un moteur de propulsion (110) d'un deux-roues (100), le deux-roues (100) étant conçu pour être propulsé manuellement au moyen d'une force de pédalage d'un conducteur de deux-roues sur des pédales (120) du deux-roues (100) et de manière motorisée au moyen d'un couple moteur du moteur de propulsion (110), le procédé de commande comprenant les étapes suivantes :
* détection (310) de grandeurs de pédalage qui représentent l'actionnement des pédales (120) par le conducteur de deux-roues,
* détection (320) de coordonnées de lieu actuelles du deux-roues (100),
* détection (330) d'un parcours, et
* commande (370) du moteur de propulsion en fonction des grandeurs de pédalage détectées et d'un degré d'assistance actuel déterminé,
**caractérisé en ce que** le procédé de commande comprend les étapes suivantes avant la commande du moteur de propulsion (110)
* détection (340) de données d'itinéraire en fonction du parcours détecté, les données d'itinéraire comprenant les coordonnées de trajet du parcours et un degré d'assistance respectivement associé aux coordonnées de trajet, et
* détermination (360) du degré d'assistance actuel en fonction des données d'itinéraire et des coordonnées de lieu actuelles.

2. Procédé de commande selon la revendication 1, **caractérisé en ce que** la détection (330) des données d'itinéraire est effectuée par une réception des données d'itinéraire par un ordinateur et/ou un dispositif serveur.

3. Procédé de commande selon l'une des revendications précédentes, **caractérisé en ce que** le procédé de commande comprend les étapes suivantes avant la commande (370) du moteur de propulsion (110)
* détermination (350) d'un sens de déplacement du deux-roues (100) en fonction des coordonnées de lieu détectées et
* détermination (360) du degré d'assistance actuel en plus en fonction du sens de déplacement déterminé.

4. Contrôleur (200) pour un moteur de propulsion (110) d'un deux-roues (100), le deux-roues (100) étant conçu pour être propulsé manuellement au moyen d'une force de pédalage d'un conducteur de deux-roues sur des pédales (120) du deux-roues (100) et de manière motorisée au moyen d'un couple moteur du moteur de propulsion (110), le contrôleur (200)
• détectant des grandeurs de pédalage au moyen d'un détecteur de grandeurs de pédalage (130), les grandeurs de pédalage représentant l'actionnement des pédales (120) par le conducteur de deux-roues,
• détectant les coordonnées de lieu actuelles du deux-roues (100) au moyen d'un détecteur de lieu (220),
• détectant un parcours, et
• générant un signal de commande destiné à commander (370) le moteur de propulsion (110) en fonction des grandeurs de pédalage détectées et d'un degré d'assistance actuel déterminé,
**caractérisé en ce que** le contrôleur (200)
• détecte des données d'itinéraire en fonction du parcours détecté, les données d'itinéraire comprenant les coordonnées de trajet du parcours et un degré d'assistance respectivement associé aux coordonnées de trajet, et
• détermine le degré d'assistance actuel en fonction des données d'itinéraire et des coordonnées de lieu actuelles.

5. Contrôleur (200) selon la revendication 4, **caractérisé en ce que** le contrôleur (200)
• acquiert les données d'itinéraire auprès d'un ordinateur (400) et/ou d'une unité serveur (500).

6. Contrôleur (200) selon l'une des revendications précédentes 4 et 5, **caractérisé en ce que** le contrôleur (200)
• détermine un sens de déplacement du deux-roues (100) en fonction des coordonnées de lieu détectées et
• détermine le degré d'assistance actuel en plus en fonction du sens de déplacement déterminé.

7. Deux-roues (100) comprenant un contrôleur (200) selon l'une des revendications 4 à 6.

8. Procédé de génération de données d'itinéraire, comprenant les étapes suivantes
• acquisition (601) d'une première saisie d'utilisateur, et
• détermination (610) d'un parcours avec des coordonnées de trajet en fonction de la première saisie d'utilisateur,
**caractérisé en ce que** le procédé comprend les étapes suivantes
• acquisition (620) d'une deuxième saisie d'utilisateur, la deuxième saisie d'utilisateur comprenant un degré d'assistance prédéfini en fonction des coordonnées de trajet,
• écriture (630) de données d'itinéraire dans un élément de mémoire (402), les données d'itinéraire comprenant les coordonnées de trajet du parcours et un degré d'assistance respectivement associé aux coordonnées de trajet, et
• envoi (640) des données d'itinéraire à une mémoire (202) d'un contrôleur (200) selon l'une des revendications 4 à 6.

9. Procédé selon la revendication 8, **caractérisé en ce que** l'acquisition (620) de la deuxième saisie d'utilisateur s'effectue en fonction de portions de trajet.

10. Procédé selon l'une des revendications 8 et 9, **caractérisé en ce que** l'acquisition (620) de la deuxième saisie d'utilisateur s'effectue en plus en fonction d'un sens de déplacement.

11. Support de données comprenant un programme informatique qui est conçu pour mettre en œuvre le procédé selon l'une des revendications 8 à 10.
